# EUROPÄISCHE PATENTSCHRIFT

(11) **EP 1 333 158 B1**
(45) Veröffentlichungstag und Bekanntmachung des Hinweises auf die Patenterteilung: **16.07.2008**
(21) Anmeldenummer: 02100080.7
(22) Anmeldetag: 30.01.2002
(51) Int. Cl.: F01L 1/34, F02D 13/02

(54) **Viertakt-Ottomotor mit Direkteinspritzung und Verfahren zur Ventilsteuerung**
Four stroke engine with direct injection and valve driving method
Moteur à quatre temps à injection directe et procédé de commande des soupapes

(43) Veröffentlichungstag der Anmeldung: 06.08.2003
(73) Patentinhaber: Ford Global Technologies, LLC, Dearborn, MI 48126 (US)
(72) Erfinder: Kramer, Ulrich, 51427, Bergisch-Gladbach (DE)
(74) Vertreter: Drömer, Hans-Carsten

(56) Entgegenhaltungen:
- EP-A- 0 854 280
- US-A- 5 870 993
- US-A- 6 105 550

## Beschreibung

Die Erfindung betrifft ein Verfahren zur Steuerung mindestens eines Einlaßventils und mindestens eines Auslaßventils eines Viertakt-Ottomotors mit Direkteinspritzung, wobei unter Teillast das Auslaßventil zu Beginn des Ansaugtaktes nach dem oberen Totpunkt des Kolbens geöffnet ist. Ferner betrifft die Erfindung einen Viertakt-Ottomotor mit Direkteinspritzung enthaltend mindestens ein Einlaßventil und mindestens ein Auslaßventil, welche über mindestens eine phasenverstellbare Nockenwelle geöffnet und geschlossen werden können, sowie eine Motorsteuerung zur Einstellung der Phasenverschiebung der Nockenwelle.

Viertakt-Brennkraftmaschinen mit Fremdzündung (Ottomotoren) werden in solche mit äußerer Gemischbildung und solche mit innerer Gemischbildung unterteilt. Bei der äußeren Gemischbildung wird das Luft-Kraftstoffgemisch außerhalb der Zylinder erzeugt, z. B. durch einen Vergaser oder durch indirekte Einspritzung des Kraftstoffes in das Ansaugrohr. Die Steuerung der Leistungsabgabe erfolgt bei diesen Motoren über eine Drosselung der Luftzufuhr.

Bei Ottomotoren mit innerer Gemischbildung erfolgt dagegen eine Direkteinspritzung des Kraftstoffes in die Brennkammern (Zylinder). Ottomotoren mit Direkteinspritzung können mit einem mageren Luft-Kraftstoffgemisch betrieben werden, welches homogen oder geschichtet im Zylinderraum verteilt werden kann. Derartige Motoren können weiterhin bei geringeren Motorlasten durch eine entsprechende Einstellung des Luft-Kraftstoffverhältnisses ohne Drosselung der Luftzufuhr betrieben werden, wodurch Pumpverluste im Teillastbetrieb vermieden werden und hierdurch die Kraftstoffausnutzung verbessert wird.

Aus der EP 854 280 A1 ist ein spezielles Steuerungsverfahren bekannt für einen Ottomotor mit Direkteinspritzung und unabhängig voneinander variabel kontrollierbaren Einlass- und Auslassventilen. Die Auslassventile werden gemäß einem unveränderlichen Programm geöffnet und geschlossen, wobei sich ihre Öffnung geringfügig über den oberen Totpunkt hinaus erstreckt. Ferner wird die Höhe und Breite der Öffnungskurven der Einlassventile so variiert, dass sich bei hoher Motorlast ein großer Überlapp zur Öffnung der Auslassventile einstellt, während bei geringen Lasten die Einlassventile erst mit zeitlichem Abstand zum Schließen der Auslassventile öffnen, was zur Erzeugung von Schockwellen beim Öffnen der Einlassventile führt.

Der Betrieb eines Ottomotors mit Direkteinspritzung hat, insbesondere bei einer Schichtladung, verschiedene Auswirkungen auf die Verbrennung. So muß zum Beispiel die Kraftstoffeinspritzung in einem verhältnismäßig engen Zeitfenster vor dem oberen Totpunkt des Kolbens während des Verdichtungstaktes erfolgen, wenn die Zündkerze das Luft-Kraftstoffgemisch ordnungsgemäß zünden können soll. Ferner ist zu beachten, daß im Vergleich zu einem Motor mit äußerer, homogener Gemischbildung die Ausbreitungsgeschwindigkeit der Flamme hoch ist. Aufgrund der genannten Effekte kann der Verbrennungsschwerpunkt, zu dem definitionsgemäß etwa 50% des Kraftstoffes verbrannt sind, nicht optimal in Hinblick auf die Effizienz gelegt werden. Die optimale Lage des Verbrennungsschwerpunktes liegt im Expansions- oder Arbeitstakt bei etwa 8 - 10° hinter dem oberen Totpunkt des Kolbens. Bei üblichen Ottomotoren mit Direkteinspritzung ist ungünstigerweise die Hälfte des Kraftstoffes schon erheblich vor diesem Punkt verbrannt.

Zur Lösung dieses Problems kann eine Abgasrückführung vorgenommen werden. Die Rückführung verbrannter Abgase in die Brennkammern führt dazu, daß beim nächsten Arbeitstakt die Verbrennung des Luft-Kraftstoffgemisches verlangsamt wird, wodurch der Verbrennungsschwerpunkt näher an seine optimale Lage heranrückt. Die Abgasrückführung kann dabei als äußere Abgasrückführung vorgenommen werden, bei welcher über zusätzliche Rohrleitungen und Ventile Abgas vom Abgaskrümmer zum Ansaugkrümmer geleitet wird. Aufgrund der zusätzlichen Bauteile ist diese Methode jedoch verhältnismäßig teuer. Weiterhin kann eine innere Abgasrückführung vorgesehen sein, bei welcher verbrannte Abgase über ein geöffnetes Auslaßventil in den Zylinder zurückfließen (vgl. DE 199 48 298 A1). Die innere Abgasrückführung kann insbesondere gezielt vorgenommen werden, wenn die Einlaßventile oder Auslaßventile variabel ansteuerbar sind, zum Beispiel über eine oder zwei Nockenwellen mit einstellbarer Phasenverschiebung. Bei den bekannten Systemen wird am Ende des Ausschiebetaktes um den oberen Totpunkt des Kolbens herum eine Überlappung der Öffnungen von Einlaßventilen und Auslaßventilen eingestellt, wodurch der gewünschte Rückfluß beziehungsweise Verbleib von Abgasen im Zylinder eintritt.

Es zeigt sich jedoch, daß das letztgenannte Verfahren der inneren Abgasrückführung bei Ottomotoren mit Direkteinspritzung nicht zu zufriedenstellenden Ergebnissen und nicht zu einer ausreichenden Verlagerung des Verbrennungsschwerpunktes führt. Aufgabe der vorliegenden Erfindung war es daher, für Viertakt-Ottomotoren mit Direkteinspritzung ein verhältnismäßig einfach zu realisierendes Verfahren bereitzustellen, mit welchem der Verbrennungsschwerpunkt näher an die optimale Lage heran beziehungsweise in die optimale Lage hinein verschoben werden kann.

Diese Aufgabe wird durch ein Verfahren mit den Merkmalen des Anspruchs 1 sowie durch einen Viertakt-Ottomotor mit den Merkmalen des Anspruchs 8 gelöst.

Vorteilhafte Ausgestaltungen sind in den Unteransprüchen enthalten.

Das erfindungsgemäße Verfahren zur Steuerung des mindestens einen Einlaßventils und des mindestens einen Auslaßventils eines Viertakt-Ottomotors mit Direkteinspritzung beruht zum einen darauf, daß unter Teillast-Bedingungen des Motors das mindestens eine Auslaßventil zu Beginn eines jeden Ansaugtaktes nach dem oberen Totpunkt des Kolbens noch offen gehalten wird. Bei der nach dem oberen Totpunkt beginnenden Abwärtsbewegung des Kolbens kann daher verbranntes Abgas aus dem Abgaskrümmer durch das offene Auslaßventil wieder angesaugt werden. Das Verfahren ist weiterhin dadurch gekennzeichnet, daß zu Beginn des Ansaugtaktes nach dem oberen Totpunkt des Kolbens das mindestens eine Einlaßventil geschlossen gehalten wird.

Im Unterschied zu bekannten Verfahren der Ventilsteuerung findet somit zu Beginn des Ansaugtaktes, wenn sich der Kolben wieder nach unten bewegt und hierdurch einen Unterdruck im Zylinder erzeugt, keine oder nur geringe überlappende Öffnung von Einlaßventilen und Auslaßventilen statt. Vielmehr wird zu diesem Zeitpunkt nur das Auslaßventil offen gehalten, so daß Abgase zurückströmen können. Da dem Zurückströmen der Abgase aufgrund des geschlossenen Einlaßventils keine einströmende Luft aus dem Ansaugkrümmer entgegenwirkt, kann eine ausreichend große Abgasmenge im Zylinder gesammelt werden. Die Sammlung einer derartigen Abgasmenge wäre bei geöffnetem Einlaßventil dagegen nicht möglich, da bei einem Ottomotor mit Direkteinspritzung keine Drosselung der Luftzufuhr stattfindet und damit im Ansaugkrümmer auch kein entsprechender Unterdruck herrscht. Mit dem erfindungsgemäßen Verfahren ist dagegen auch bei einem derartigen Motor eine ausreichend hohe innere Abgasrückführung möglich, welche zu einer Verschiebung des Verbrennungsschwerpunktes in Richtung der optimalen Lage ausgenutzt werden kann. Anders als bei der äußeren Abgasrückführung sind zur Erzielung dieses Ergebnisses keine zusätzlichen Baumaßnahmen am Motor erforderlich.

Gemäß einer bevorzugten Ausführungsart des Verfahrens erfolgt das Schließen des mindestens einen Auslaßventils im Ansaugtakt und das Öffnen des mindestens einen Einlaßventils im Ansaugtakt derart, daß der Verbrennungsschwerpunkt, bei welchem 50% des Kraftstoffes verbrannt ist, in den optimalen Zeitpunkt verschoben wird. Dieser optimale Zeitpunkt liegt typischerweise zwischen 8 - 10° Kurbelwellenwinkel nach dem oberen Totpunkt des Kolbens. Dadurch, daß der Verbrennungsschwerpunkt entsprechend verzögert werden kann, läßt sich eine maximale Verbrennungseffizienz erreichen.

Gemäß einer bevorzugten Weiterbildung des Verfahrens werden das mindestens eine Einlaßventil und das mindestens eine Auslaßventil des Ottomotors unter Teillast im Ansaugtakt derart betrieben, daß sich die jeweiligen Öffnungszeiten nicht überlappen. Vorzugsweise wird das Auslaßventil ungefähr zu demselben Zeitpunkt geschlossen, zu dem das Einlaßventil sich zu öffnen beginnt. Durch den Ausschluß einer Ventilüberlappung wird sichergestellt, daß dem Rückstrom der Abgase durch das geöffnete Auslaßventil zu keinem Zeitpunkt das Einströmen von Luft durch das Einlaßventil entgegenwirkt. Auf diese Weise läßt sich eine sehr genau bestimmbare Abgasmenge in den Zylinder zurückführen.

Das mindestens eine Auslaßventil des Ottomotors wird unter Teillast zu Beginn des Ansaugtaktes vorzugsweise noch bis mindestens 10°, besonders bevorzugt bis mindestens 45° Kurbelwellenwinkel nach dem oberen Totpunkt des Kolbens offen gehalten. In ähnlicher Weise wird das mindestens eine Einlaßventil des Ottomotors unter Teillast zu Beginn des Ansaugtaktes vorzugsweise noch bis mindestens 10°, besonders bevorzugt bis mindestens 45° nach dem oberen Totpunkt des Kolbens geschlossen gehalten. Es hat sich gezeigt, daß bei derartigen konkreten Einstellungen der Ventilsteuerung zum einen eine ausreichend hohe interne Abgasrückführung eintritt, die für eine Verschiebung des Verbrennungsschwerpunktes in die optimale Lage ausreicht, und zum anderen noch eine hinreichende Menge an Frischluft angesaugt werden kann.

Gemäß einer bevorzugten Ausgestaltung des Verfahrens werden das mindestens eine Einlaßventil und das mindestens eine Auslaßventil des Ottomotors von einer gemeinsamen Nockenwelle mit verstellbarer Phase betätigt. Die Grundeinstellung einer derartigen Nockenwelle besteht im Allgemeinen darin, daß sich das Auslaßventil zum Ende des Ausstoßtaktes am oberen Totpunkt des Kolbens schließt, während sich das Einlaßventil zum selben Zeitpunkt mit Beginn des Ansaugtaktes zu öffnen beginnt. Diese Einstellung kann mit einer gemeinsamen phasenverschiebbaren Nockenwelle für beide Ventile parallel vorgezogen oder verzögert werden. Die Durchführung des vorstehend erläuterten Verfahrens findet dabei über eine Späteinstellung der Nockenwelle unter Teillast-Bedingungen des Motors statt.

Gemäß einer anderen Ausgestaltung des Verfahrens werden das mindestens eine Einlaßventil und das mindestens eine Auslaßventil des Ottomotors jeweils von einer eigenen Nockenwelle mit verstellbarer Phase betätigt. Die Steuerung der Einlaß- und Auslaßventile über eigene, separat verstellbare Nockenwellen ist zwar konstruktiv aufwendiger, ermöglicht jedoch eine größere Flexibilität der Motorsteuerung.

Die Erfindung betrifft weiterhin einen Viertakt-Ottomotor mit Direkteinspritzung, welcher mindestens ein Einlaßventil und mindestens ein Auslaßventil enthält, die über mindestens eine phasenverstellbare Nockenwelle geöffnet und geschlossen werden können. Weiterhin enthält der Ottomotor eine Motorsteuerung, welche die Einstellung der Phasenverschiebung der Nockenwelle vornehmen kann und welche dahingehend ausgebildet ist, ein Verfahren der oben erläuterten Art auszuführen. D.h., daß die Motorsteuerung die mindestens eine Nockenwelle insbesondere derart ansteuern kann, daß unter Teillast des Motors zu Beginn des Ansaugtaktes nach dem oberen Totpunkt des Kolbens das Auslaßventil noch offen gehalten und gleichzeitig das Einlaßventil noch geschlossen gehalten wird. Die Motorsteuerung kann insbesondere als Mikrocomputer realisiert sein. Mit einem derartigen Ottomotor lassen sich die Vorteile des beschriebenen Verfahrens erzielen, also eine ausreichende interne Abgasrückführung zur Verschiebung des Verbrennungsschwerpunktes in seine optimale Lage.

Gemäß einer Weiterbildung des vorstehend beschriebenen Viertakt-Ottomotors weisen das mindestens eine Einlaßventil und das mindestens eine Auslaßventil jeweils eine eigene, separat von der Motorsteuerung verstellbare Nockenwelle auf. Durch die separate Verstellbarkeit der Phasen von Einlaßventil und Auslaßventil kann eine hohe Flexibilität bei der Motorsteuerung erzielt werden, mit welcher unter allen Betriebsbedingungen optimale Einstellungen vorgenommen werden können.

Die mindestens eine Nockenwelle des Ottomotors ist vorzugsweise obenliegend, d.h. am Zylinderkopf verlaufend angeordnet.

Die Erfindung wird nachfolgend anhand der Figuren beispielhaft näher erläutert. Es zeigen:
- Fig. 1: ein Ventilsteuerungsdiagramm für einen Ottomotor mit äußerer Gemischbildung und doppelten obenliegenden Nockenwellen im Normalbetrieb und unter Teillast gemäß dem Stand der Technik; und
- Fig. 2: ein Ventilsteuerungsdiagramm entsprechend Figur 1 für eine erfindungsgemäße Ventilsteuerung unter Teillast bei einem Ottomotor mit Direkteinspritzung.

In den beiden Figuren ist der Ventilöffnungshub (vertikale Achse) gegenüber dem Kurbelwellenwinkel (horizontale Achse) aufgetragen. Die jeweils linken Kurven 1, 3, 11 und 13 beziehen sich dabei auf ein Auslaßventil und die jeweils rechten Kurven 2, 4, 12 und 14 auf ein Einlaßventil. Die genannten Ventile sind in bekannter Weise am Kopf der Zylinder eines Viertakt-Ottomotors angeordnet, um den Eintritt von Frischluft beziehungsweise den Austritt der verbrannten Abgase zu steuern.

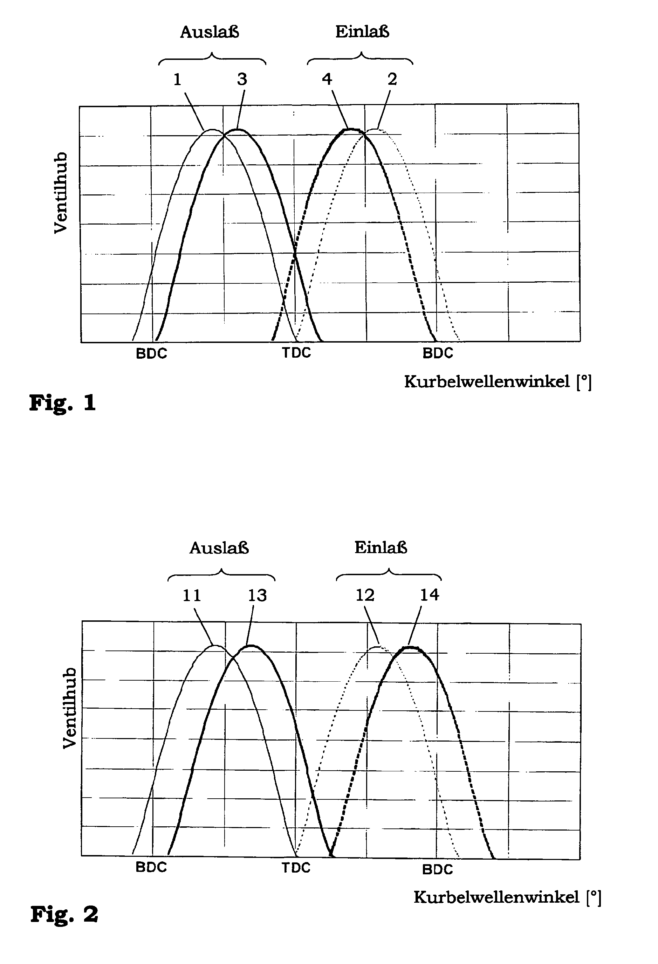

In Figur 1 zeigen die Kurven 1 und 2 die Ventilsteuerung während eines Normalbetriebs. Hierbei ist das Auslaßventil während des Ausstoßtaktes zwischen dem unteren Totpunkt BDC und dem oberen Totpunkt TDC des Kolbens geöffnet und ansonsten geschlossen. Das Einlaßventil (Kurve 2) ist entsprechend während des Ansaugtaktes zwischen oberem Totpunkt TDC und dem nächsten unteren Totpunkt BDC geöffnet. Am oberen Totpunkt TDC des Kolbens findet kein beziehungsweise nur eine minimale Überlappung der Ventilöffnungen statt.

Weiterhin ist aus Figur 1 eine im Stand der Technik übliche Ansteuerung der Ventile unter Teillast dargestellt, wobei das Auslaßventil gemäß der Kurve 3 verzögert und das Einlaßventil gemäß der Kurve 4 frühverstellt betrieben wird. Eine solche separate Phasenverstellung ist mit zwei getrennten Nockenwellen für die Einlaßventile und die Auslaßventile möglich. Die Ventilüberlappung um den oberen Totpunkt TCD herum führt dazu, daß gegen Ende des Ausstoßtaktes Abgase in den Ansaugkrümmer gedrückt werden und daß zu Beginn des Ansaugtaktes nach dem oberen Totpunkt verbrannte Abgase aus dem Abgaskrümmer zurückgesaugt werden. Auf diese Weise findet eine interne Abgasrückführung statt, über welche sich das Verbrennungsverhalten steuern läßt.

Es hat sich jedoch gezeigt, daß bei Viertakt-Ottomotoren mit Direkteinspritzung die durch eine Ventilüberlappung erzielbare interne Abgasrückführung nicht ausreichend hoch ist, um eine Verschiebung des Verbrennungsschwerpunktes in die optimale Lage (ca. 8 - 10° nach TDC) zu ermöglichen, da im Ansaugkrümmer aufgrund der fehlenden Drosselung kein ausreichender Unterdruck zum Ansaugen der Abgase herrscht.

Um dennoch unter Teillast-Bedingungen des Motors eine ausreichende interne Abgasrückführung zu erzielen, und um ferner die durch eine Abgasrückführung mögliche Reduzierung der Bildung von Stickoxiden zu verbessern, wird das in Figur 2 dargestellte Verfahren zur Ansteuerung der Ventile vorgeschlagen.

Hierbei stellen die Kurven 11 für das Auslaßventil und 12 für das Einlaßventil wieder den Normalbetrieb entsprechend den Kurven 1 und 2 aus Figur 1 dar. Erfindungsgemäß werden nun unter Teillast des Motors sowohl die Einlaßventile als auch die Auslaßventile gleichermaßen verzögert betrieben, so daß sich hierfür die Kurven 13 beziehungsweise 14 ergeben. Eine derartige parallele Verzögerung von Einlaßventilen und Auslaßventilen kann sowohl mit einer gemeinsamen phasenverschiebbaren Nockenwelle für Einlaßventile und Auslaßventile als auch mit separaten Nockenwellen für Einlaßventile und Auslaßventile erzielt werden. Aus konstruktiven Gründen bevorzugt ist es dabei, wenn die jeweiligen Nockenwellen obenliegend angeordnet sind, so daß eine sogenannte sohc-Konfiguration (single overhead camshaft) beziehungsweise dohc-Konfiguration (double overhead camshaft) entsteht.

Bei der erfindungsgemäßen Ansteuerung ist das Auslaßventil entsprechend Kurve 13 auch noch zu Beginn des Ansaugtaktes bis etwa 45° nach dem oberen Totpunkt TDC geöffnet. Das Einlaßventil ist im selben Zeitraum noch geschlossen und beginnt sich erst zu öffnen, wenn das Auslaßventil geschlossen ist. Auf diese Weise wird erreicht, daß zu Beginn des Ansaugtaktes Abgase aus dem Abgaskrümmer durch das offene Auslaßventil zurückgesaugt werden, ohne daß dies durch den unzureichenden Unterdruck im Ansaugkrümmer gestört würde. Daher läßt sich trotz des ungedrosselten Betriebes eines Ottomotors mit Direkteinspritzung eine ausreichend hohe interne Abgasrückführung erzielen, welche den Verbrennungsschwerpunkt in die optimale Lage legt und gleichzeitig die Stickoxidemissionen reduziert.

## Patentansprüche

1. Verfahren zur Steuerung mindestens eines Einlaßventils und mindestens eines Auslaßventils eines Viertakt-Ottomotors mit Direkteinspritzung, wobei unter Teillast zu Beginn des Ansaugtaktes nach dem oberen Totpunkt (TDC) des Kolbens das Auslaßventil geöffnet und das Einlaßventil geschlossen ist,
**dadurch gekennzeichnet, daß**
sowohl das Einlaßventil als auch das Auslaßventil ausgehend von einem Normalbetrieb, in dem das Auslaßventil während des Ausstoßtaktes zwischen dem unteren Totpunkt (BDC) und dem oberen Totpunkt (TDC) des Kolbens geöffnet und ansonsten geschlossen ist und in dem das Einlaßventil während des Ansaugtaktes zwischen dem oberen Totpunkt (TDC) und dem nächsten unteren Totpunkt (BDC) geöffnet ist, unter Teillast-Bedingungen des Motors derart gleichermaßen und parallel verzögert betrieben werden, dass das Einlaßventil und das Auslaßventil im Ansaugtakt ohne Überlappung geöffnet werden.

2. Verfahren nach Anspruch 1,
**dadurch gekennzeichnet, daß**
das Schließen des Auslaßventils und das Öffnen des Einlaßventils derart erfolgt, dass der Verbrennungsschwerpunkt im optimalen Zeitpunkt liegt, vorzugsweise bei etwa 8°- 10° Kurbelwellenwinkel nach dem oberen Totpunkt des Kolbens im Expansionstakt.

3. Verfahren nach Anspruch 1 oder 2 ,
**dadurch gekennzeichnet, daß**
das Auslaßventil unter Teillast zu Beginn des Ansaugtaktes bis mindestens 10°, vorzugsweise bis mindestens 45° nach dem oberen Totpunkt offen gehalten wird.

4. Verfahren nach einem der Ansprüche 1 bis 3,
**dadurch gekennzeichnet, daß**
das Einlaßventil unter Teillast zu Beginn des Ansaugtaktes bis mindestens 10°, vorzugsweise bis mindestens 45° nach dem oberen Totpunkt geschlossen gehalten wird.

5. Verfahren nach einem der Ansprüche 1 bis 4,
**dadurch gekennzeichnet, daß**
das Einlaßventil und das Auslaßventil von einer gemeinsamen Nockenwelle mit verstellbarer Phase betätigt werden.

6. Verfahren nach einem der Ansprüche 1 bis 4,
**dadurch gekennzeichnet, daß**
das Einlaßventil und das Auslaßventil jeweils von einer eigenen Nockenwelle mit verstellbarer Phase betätigt werden.

7. Viertakt-Ottomotor mit Direkteinspritzung, enthaltend mindestens ein Einlaßventil und mindestens ein Auslaßventil, welche über mindestens eine phasenverstellbare Nockenwelle geöffnet und geschlossen werden können, sowie eine Motorsteuerung zur Einstellung der Phasenverschiebung der Nockenwelle,
**dadurch gekennzeichnet, daß**
die Motorsteuerung derart ausgebildet ist, dass diese das Verfahren nach einem der Ansprüche 1 bis 6 ausführt.

8. Viertakt-Ottomotor nach Anspruch 7,
**dadurch gekennzeichnet, daß**
für das mindestens eine Einlaßventil und das mindestens eine Auslaßventil jeweils eine eigene, separat von der Motorsteuerung verstellbare Nockenwelle vorgesehen ist.

9. Viertakt-Ottomotor nach Anspruch 7 oder 8,
**dadurch gekennzeichnet, daß**
die mindestens eine Nockenwelle obenliegend angeordnet ist.

## Claims

1. Method for controlling at least one inlet valve and at least one outlet valve of a four-stroke petrol engine with direct injection, under part-load, the outlet valve being opened and the inlet valve closed at the commencement of the intake stroke after the top dead centre (TDC) of the piston, **characterized in that**, starting from normal operation, in which the outlet valve is opened during the expulsion stroke between the bottom dead centre (BDC) and top dead centre (TDC) of the piston and is otherwise closed and in which the inlet valve is opened during the intake stroke between the top dead centre (TDC) and the next bottom dead centre (BDC), under part-load conditions of the engine both the inlet valve and the outlet valve are operated with an equal and parallel delay in such a way that the inlet valve and the outlet valve are opened without overlap in the intake stroke.

2. Method according to Claim 1, **characterized in that** the closing of the outlet valve and the opening of the inlet valve take place in such a way that the combustion focus lies at the optimal time point, preferably at a crankshaft angle of about 8°-10° after the top dead centre of the piston in the expansion stroke.

3. Method according to Claim 1 or 2, **characterized in that**, under part-load, the outlet valve is kept open at the commencement of the intake stroke up to at least 10°, preferably up to at least 45°, after top dead centre.

4. Method according to one of Claims 1 to 3, **characterized in that**, under part-load, the inlet valve is kept closed at the commencement of the intake stroke up to at least 10°, preferably up to at least 45°, after top dead centre.

5. Method according to one of Claims 1 to 4, **characterized in that** the inlet valve and the outlet valve are actuated with adjustable phase by a common camshaft.

6. Method according to one of Claims 1 to 4, **characterized in that** the inlet valve and the outlet valve are in each case actuated with adjustable phase by a specific camshaft.

7. Four-stroke petrol engine with direct injection, containing at least one inlet valve and at least one outlet valve which can be opened and closed via at least one phase-adjustable camshaft, and also engine control for setting the phase shift of the camshaft, **characterized in that** the engine control is designed in such a way that it carries out the method according to one of Claims 1 to 6.

8. Four-stroke petrol engine according to Claim 7, **characterized in that** in each case a specific camshaft adjustable separately by the engine control is provided for the at least one inlet valve and the at least one outlet valve.

9. Four-stroke petrol engine according to Claim 7 or 8, **characterized in that** the at least one camshaft is arranged overhead.

## Revendications

1. Procédé de commande d'au moins une soupape d'admission et d'au moins une soupape d'échappement d'un moteur à allumage par étincelle à quatre temps à injection directe, dans lequel, en charge partielle, au début du temps d'admission, après le point mort haut (TDC) du piston, la soupape d'échappement est ouverte et la soupape d'admission est fermée,
**caractérisé en ce que**
la soupape d'admission ainsi que la soupape d'échappement, partant d'un mode de fonctionnement normal, dans lequel la soupape d'échappement est ouverte pendant le temps d'échappement entre le point mort bas (BDC) et le point mort haut (TDC) du piston et est sinon fermée, et dans lequel la soupape d'admission est ouverte pendant le temps d'admission entre le point mort haut (TDC) et le point mort bas suivant (BDC), dans des conditions de charge partielle du moteur, sont actionnées avec un retard dans une même mesure et en parallèle, de telle sorte que la soupape d'admission et la soupape d'échappement soient ouvertes pendant le temps d'admission sans chevauchement.

2. Procédé selon la revendication 1,
**caractérisé en ce que**
la fermeture de la soupape d'échappement et l'ouverture de la soupape d'admission s'effectuent de telle sorte que le centre de la combustion se situe à l'instant optimal, de préférence à environ 8° - 10° d'angle de vilebrequin après le point mort haut du piston dans le temps de détente.

3. Procédé selon la revendication 1 ou 2,
**caractérisé en ce que**
la soupape d'échappement est maintenue ouverte en charge partielle au début du temps d'admission jusqu'à au moins 10°, de préférence jusqu'à au moins 45° après le point mort haut.

4. Procédé selon l'une quelconque des revendications 1 à 3,
**caractérisé en ce que**
la soupape d'admission est maintenue fermée en charge partielle au début du temps d'admission jusqu'à au moins 10°, de préférence jusqu'à au moins 45° après le point mort haut.

5. Procédé selon l'une quelconque des revendications 1 à 4,
**caractérisé en ce que**
la soupape d'admission et la soupape d'échappement sont actionnées par un arbre à cames commun avec une phase réglable.

6. Procédé selon l'une quelconque des revendications 1 à 4,
**caractérisé en ce que**
la soupape d'admission et la soupape d'échappement sont actionnées chacune par un arbre à cames propre avec une phase réglable.

7. Moteur à allumage par étincelle à quatre temps à injection directe comprenant au moins une soupape d'admission et au moins une soupape d'échappement, qui peuvent être ouvertes et fermées par le biais d'au moins un arbre à cames à phases réglables, ainsi qu'une commande de moteur pour ajuster le décalage des phases de l'arbre à cames,
**caractérisé en ce que**
la commande du moteur est réalisée de telle sorte qu'elle puisse mettre en oeuvre le procédé selon l'une quelconque des revendications 1 à 6.

8. Moteur à allumage par étincelle à quatre temps selon la revendication 7,
**caractérisé en ce que**
pour l'au moins une soupape d'admission et l'au moins une soupape d'échappement, on prévoit à chaque fois un arbre à cames propre, réglable séparément par la commande du moteur.

9. Moteur à allumage par étincelle à quatre temps selon la revendication 7 ou 8,
**caractérisé en ce que**
l'au moins un arbre à cames est disposé en tête.
